# EUROPÄISCHE PATENTSCHRIFT

(11) **EP 0 373 370 B1**
(45) Veröffentlichungstag und Bekanntmachung des Hinweises auf die Patenterteilung: **17.03.1993**
(21) Anmeldenummer: 89120968.6
(22) Anmeldetag: 11.11.1989
(51) Int. Cl.: B29C 43/32, G01B 13/12

(54) **Einrichtung zur Bestimmung des Abstandes zwischen zwei Flächen, die mit der oberen beziehungsweise mit der unteren Formhälfte eines Presswerkzeugs in Verbindung stehen**
Apparatus for determining the distance between two surfaces being in connection with the upper or lower mould half of a pressing tool
Dispositif pour déterminer la distance entre deux surfaces en connexion tant avec la moitié moulée supérieure qu'inférieure d'un outil à presser

(30) Priorität: 08.12.1988 DE 3841327
(43) Veröffentlichungstag der Anmeldung: 20.06.1990
(73) Patentinhaber: Umformtechnik ERFURT GmbH, D-99086 Erfurt (DE)
(72) Erfinder: Brüssel, Richard, D-7519 Sulzfeld (DE)

(56) Entgegenhaltungen:
- DD-A- 68 386
- DE-A- 1 623 339
- US-A- 2 523 564
- US-A- 4 076 780

## Beschreibung

### Einrichtung zur Bestimmung des Abstandes zwischen zwei Flächen, die mit der oberen beziehungsweise mit der unteren Formhälfte eines Preßwerkzeugs in Verbindung stehen.

Die Erfindung betrifft eine Einrichtung zur Bestimmung des Abstandes zwischen zwei Flächen, die mit der oberen bzw. mit der unteren Formhälfte eines Preßwerkzeugs, insbesondere für die Verarbeitung faserverstärkter Formmassen, in Verbindung stehen und die derart aufeinander abgestimmt sind, daß die Formhälften die der gewünschten Formteildicke entsprechende Endstellung einnehmen, falls der gegenseitige Abstand der Flächen einen Grenzwert aufweist.

Während der Herstellung von Formteilen aus faserverstärkten Formmassen durch Pressen muß dafür Sorge getragen werden, daß die Preßkraft ausschließlich an der Formmasse zur Einwirkung kommt, also auch nicht nur teilweise von an den Formhälften angebrachten Abstandshaltern aufgenommen wird. Diese sind hinsichtlich ihrer Lage und Ausbildung so aufeinander abgestimmt, daß die gewünschte Dicke des herzustellenden Formteils bei einem vorgegebenen geringen Abstand zwischen den Abstandshaltern - beispielsweise in der Größenordnung von 0,2 mm - erzielt wird.

Die Abstandsmessung, aufgrund welcher sich die gewünschte Formteildicke erzielen läßt, ist bei den hier besonders angesprochenen Preßwerkzeugen für die Verarbeitung faserverstärkter Formmassen insofern mit Schwierigkeiten verbunden, als die Preßwerkzeuge ohne weiteres Temperaturen bis 200 °C aufweisen können und beim Preßvorgang in zeitlichen Abständen zu beseitigende Verunreinigungen anfallen. Beide Umstände stellen den Einsatz funktionssicherer Meßeinrichtungen zumindest in Frage.

Der Erfindung liegt die Aufgabe zugrunde, eine Einrichtung zur Bestimmung des Abstandes zwischen zwei geeigneten Flächen an der oberen bzw. unteren Formhälfte eines Preßwerkzeugs zu schaffen, welche wenig störanfällig, insbesondere schmutz- und temperaturunempfindlich ist, und die ohne besonderen Justieraufwand verläßliche Meßwerte liefert.

Die gestellte Aufgabe wird durch eine Einrichtung mit den Merkmalen des Anspruchs 1 gelöst. Der Grundgedanke der Erfindung besteht danach darin, eine in einer der beiden benachbarten Flächen angeordnete Düse über einen Speicher an eine Druckquelle für ein kompressibles Strömungsmittel (insbesondere Luft oder ein Inertgas) anzuschließen und - ausgehend von einem Ausgangszustand, bei dem an dem mit der Druckquelle und der Düse verbundenen Speicher ein bestimmter, vorgegebener Druck anliegt - die Zeitspanne zu messen, innerhalb weicher der am Speicher anliegende Druck nach Abschalten der Druckquelle auf einen vorgegebenen Unterwert abgesunken ist. Diese Zeitspanne stellt ein Maß für den gegenseitigen Abstand der beiden den Formhälften zugeordneten Flächen dar.
Die Düse sollte zur Erzielung ausreichend genauer Meßergebnisse derart ausgelegt sein, daß sie selbst einen erheblich kleineren Drosselwiderstand zur Folge hat als der Spalt zwischen den benachbarten Flächen.
Bei Verwendung von Luft als kompressibles Strömungsmittel kann beispielsweise eine Düse mit einer Düsenbohrung in der Größenordnung von 3 mm für die Ermittlung von Abständen zwischen den beiden Flächen zum Einsatz kommen, die nicht mehr als etwa 0,5 mm betragen.
Im Hinblick auf einwandfreie Meßergebnisse muß die neu vorgeschlagene Einrichtung im übrigen derart ausgestaltet sein, daß die bereits erwähnte Zeitmessung jeweils unter möglichst übereinstimmenden, reproduzierbaren Umständen durchgeführt wird; dies setzt u. a. voraus, daß die Zeitmessung erst dann beginnt, wenn sich in dem an die Druckquelle angeschlossenen Speicher ein quasistationärer Zustand eingestellt hat, bei dem der am Speicher anliegende Druck einen entsprechenden Oberwert angenommen hat.

Bei einer vorteilhaften Ausführungsform des Erfindungsgegenstandes ist die Steuereinheit zur Ermittlung der Zeitspanne des Druckabfalls mit einem Druckfühler ausgestattet, der mit dem Speicher parallelgeschaltet ist (Anspruch 2). Der Druckquelle ist zweckmäßig in Richtung auf den Speicher ein Absperrventil vorgeschaltet, dasabhängig von einem vorgegebenen Oberwert des am Speicher anliegenden Druckes - in die Sperrstellung schaltbar ist (Anspruch 3).
Die Steuereinheit kann dazu mit einer optischen Anzeige ausgestattet sein, welche den am Speicher anliegenden Druck anzeigt und bei Vorliegen eines bestimmten Oberwertes das Abschalten der Druckquelle durch Betätigung des Absperrventils von Hand ermöglicht. Es besteht jedoch auch die Möglichkeit, die Steuereinheit und das Absperrventil in der Weise schaltungstechnisch miteinander zu verknüpfen, daß das Absperrventil ferngesteuert in die Sperrstellung bewegt wird, sobald die Steuereinheit über ihren Druckfühler einen bestimmten Oberwert des am Speicher anliegenden Druckes feststellt.

Vorzugsweise ist der Speicher mit seinem Austrittsende seitlich an dem Körper befestigt, welcher die der oberen Formhälfte zugehörige Fläche trägt (Anspruch 4). Der Speicher selbst kann dabei in einfacher Weise von einem Schlauch, insbesondere aus einem geeigneten widerstandsfähigen Kunststoff (vorzugsweise PTFE), gebildet sein (Anspruch 5). Bedingt durch die seitliche Anordnung des Speichers lassen sich die Schalt- und Steuerbestandteile der Meßeinrichtung außerhalb des Bereichs hoher Temperaturen und außerhalb des Verschmutzungsbereichs anordnen. Da lediglich in einem der Körper, welche die sich gegenüberliegenden Flächen aufnehmen, eine Düse mit einer einfach herzustellenden Düsenbohrung angeordnet ist, können selbst dann keine Justierprobleme entstehen, wenn sich die Dicke des betreffenden Körpers, beispielsweise durch Abschleifen, ändert.
Bedingt durch die Verwendung eines Schlauches als Speicher lassen sich die bereits erwähnten empfindlichen Bestandteile ohne besonderen Aufwand ortsfest - und damit auch wenig störanfällig - beispielsweise am Pressengestell anbringen.

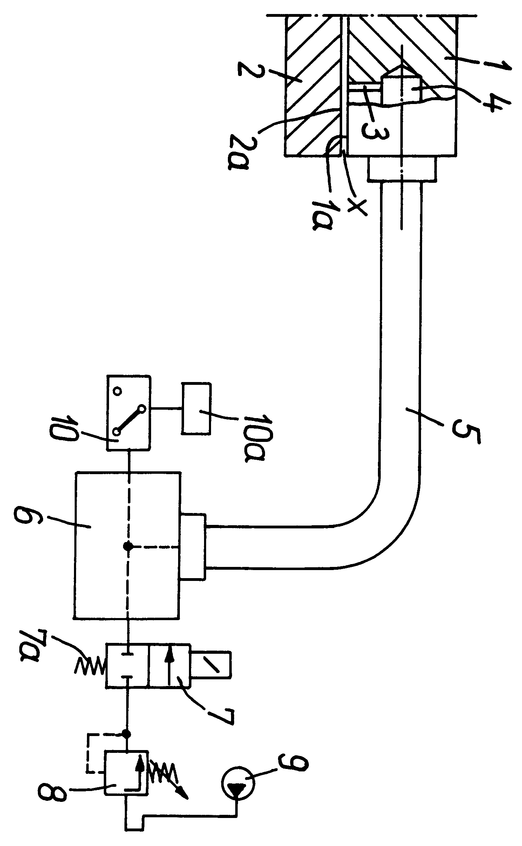

Die Erfindung wird nachfolgend anhand der Zeichnung im einzelnen erläutert. In dieser sind lediglich Teile des oberen und unteren Abstandshalters für das obere bzw. untere Formteil eines Preßwerkzeugs dargestellt. Wegen der Ausbildung eines geeigneten Preßwerkzeugs wird beispielsweise auf die US-Patentschrift 4 076 780 Bezug genommen.

Zur Ermittlung des Abstandes x zwischen den einander zugewandten Flächen 1a, 2a des oberen und unteren Abstandshalters 1 bzw. 2 eines im übrigen nicht dargestellten Preßwerkzeugs ist der obere Abstandshalter mit einer Düse 3 in Gestalt einer Düsenbohrung ausgestattet, die senkrecht zu den Flächen 1a, 2a ausgerichtet ist.
Der obere Abstandshalter 1 ist weiterhin auf seiner nach außen gerichteten Seite mit einer Anschlußbohrung 4 versehen, die unter Zwischenschaltung eines Kunststoff-Schlauches 5, eines Verbindungsstückes 6, eines Absperrventils 7 und eines Druckregelventils 8 mit einer Druckquelle 9 (in Form einer Druckluftpumpe) in Verbindung steht. Das Absperrventil 7 nimmt in der Ruhelage unter Einwirkung seiner Schließfeder 7a die dargestellte Sperrstellung ein, in welcher die Zufuhr von Druckluft in den Speicher 5 unterbrochen ist.

Das Zwischenstück 6 steht weiterhin mit dem nicht dargestellten Druckfühler einer Steuereinheit 10 in Verbindung, die über eine Anzeige 10a den gemessenen Abstand x sichtbar macht.
Die Steuereinheit ist in der Weise ausgestaltet, daß sie nach dem Unterbrechen der Druckluftzufuhr durch Schließen des Absperrventils 7 die Zeitspanne mißt, innerhalb welcher der im Zeitpunkt des Abschaltens der Druckquelle 9 am Speicher 5 anliegende Druck (der sogenannte Oberwert) auf einen vorgegebenen Unterwert abgesunken ist. Die gemessene Zeitspanne ist ein Maß für den gegenseitigen Abstand x der Flächen 1a und 2a; dieser Abstandswert wird mittels der Anzeige 10a optisch sichtbar gemacht.

Um sicherzustellen, daß die Abstandsmessung jeweils unter übereinstimmenden, reproduzierbaren Umständen durchgeführt wird, wird der Speicher 5 jeweils solange an die Druckquelle 9 angeschlossen, bis sich ein quasistationärer Zustand mit dem zugehörigen Oberwert des Druckes eingestellt hat. Erst dann wird dem Schließen des Absperrventils 7 die mittels der Steuereinheit 10 durchgeführte Zeitmessung in Gang gesetzt. Wärenddessen sinkt der Druck innerhalb des Speichers - abhängig von der Größe des Abstandes x zwischen den Flächen 1a und 2a - mehr oder weniger schnell ab.

Die Steuereinheit 10 kann auch in der Weise ausgebildet sein, daß sie selbst die Verschiebung des Absperrventils 7 in die dargestellte Sperrstellung auslöst, sobald der am Speicher 5 anliegende Druck einen bestimmten vorgegebenen Oberwert angenommen hat.

Der Erfindungsgegenstand findet als Kontrollorgan in der Weise Verwendung, daß jeweils gegen Ende eines Preßvorgangs in der zuvor beschriebenen Weise überprüft wird, ob die in Frage kommenden Flächen zu diesem Zeitpunkt mit Abstand voneinander angeordnet sind und damit sichergestellt ist, daß die Preßkraft ausschließlich an der zu verarbeitenden Formmasse zur Einwirkung kommt.

## Patentansprüche

1. Einrichtung zur Bestimmung des Abstandes zwischen zwei Flächen, die mit der oberen bzw. mit der unteren Formhälfte eines Preßwerkzeugs, insbesondere für die Verarbeitung faserverstärkter Formmassen, in Verbindung stehen und die derart aufeinander abgestimmt sind, daß die Formhälften die der gewünschten Formteildicke entsprechende Endstellung einnehmen, falls der gegenseitige Abstand der Flächen einen Grenzwert aufweist,
**dadurch gekennzeichnet**,
daß eine der beiden Flächen (1a) eine auf die andere Fläche (2a) ausgerichtete Düse (3) aufweist, die über einen Speicher (5) an eine druckgeregelte Druckquelle in (9) für ein kompressibles Strömungsmittel anschließbar ist, und daß eine Steuereinheit (10) vorgesehen ist, die beginnend mit dem Abschalten der Druckquelle die Zeitspanne mißt, in welcher der im Abschaltzeitpunkt am Speicher anliegende Druck auf einen vorgegebenen Unterwert abgesunken ist.

2. Einrichtung nach Anspruch 1, dadurch gekennzeichnet, daß die Steuereinheit (10) einen Druckfühler aufweist, der mit dem Speicher (5) parallelgeschaltet ist.

3. Einrichtung nach zumindest einem der Ansprüche 1 bis 2, dadurch gekennzeichnet, daß die Druckquelle (9) mit einem Absperrventil (7) ausgestattet ist, das - abhängig von einem vorgegebenen Oberwert des am Speicher (5) anliegenden Druckes - in die Sperrstellung schaltbar ist.

4. Einrichtung nach zumindest einem der Ansprüche 1 bis 3, dadurch gekennzeichnet, daß der Speicher (5) mit seinem Austrittsende seitlich an dem Körper (1) befestigt ist, welcher die der oberen Formhälfte zugehörige Fläche (1a) trägt.

5. Einrichtung nach zumindest einem der Ansprüche 1 bis 4, dadurch gekennzeichnet, daß der Speicher von einem Schlauch (5) gebildet ist.

## Claims

1. Device for determining the spacing between two surfaces which are connected to the upper and the lower mould half of a compression mould, in particular for processing fibre-reinforced moulding materials, and are adapted to one another such that the mould halves take up the end position which corresponds to the desired moulding thickness, if the spacing between the surfaces has a limit, characterised in that one of the two surfaces (1a) comprises a nozzle (3), which is directed at the other surface (2a) and can be connected via a store (5) to a pressure-controlled pressure source at (9) for a compressible flow medium, and that a control unit (10) is provided which, beginning when the pressure source is disconnected, measures the period of time in which the pressure applied to the store at the time of disconnection has dropped to a predetermined lower value.

2. Device according to claim 1, characterised in that the control unit (10) comprises a pressure transducer, which is connected in parallel with the store (5).

3. Device according to at least one of claims 1 and 2, characterised in that the pressure source (9) is provided with a stop valve (7) which - according to a predetermined upper value of the pressure applied to the store (5) - can be switched into the shut-off position.

4. Device according to at least one of claims 1 to 3, characterised in that the store (5) is secured at its delivery end to the side of the body (1) which bears the surface (1a) belonging to the top mould half.

5. Device according to at least one of claims 1 to 4, characterised in that the store is formed by a flexible tube (5).

## Revendications

1. Dispositif pour déterminer la distance entre deux surfaces en connexion tant avec la moitié moulée supérieure qu'inférieure d'un outil à presser, en particulier destiné au façonnage de matières moulables renforcées par fibres, surfaces qui sont adaptées l'une sur l'autre de telle sorte que les moitiés moulées prennent la position finale correspondant à l'épaisseur souhaitée de la pièce usinée dans le cas où la distance réciproque des surfaces présente une valeur limite, caractérisé en ce que l'une des deux surfaces (la) présente une tuyère (3) alignée sur l'autre surface (2a) et qui peut être raccordée, par l'intermédiaire d'un réservoir (5), à une source de pression (9) à pression régulée pour un agent d'écoulement compressible, et en ce qu'est prévu un organe de commande (10) qui, dès la mise hors circuit de la source de pression, mesure l'intervalle de temps pendant lequel la pression existant dans le réservoir au moment de la mise hors circuit a baissé pour atteindre une valeur inférieure donnée.

2. Dispositif selon la revendication 1, caractérisé en ce que l'organe de commande (10) présente un capteur de pression qui est monté en parallèle avec le réservoir (5).

3. Dispositif selon au moins l'une des revendications 1 à 2, caractérisé en ce que la source de pression (9) est équipée d'une soupape d'arrêt (7) qui peut être commutée en position de blocage - en fonction d'une valeur supérieure donnée de la pression existant dans le réservoir (5).

4. Dispositif selon au moins l'une des revendications 1 à 3, caractérisé en ce que le réservoir (5) est fixé latéralement, par son extrémité de sortie, au corps (1) qui porte la surface (1a) appartenant à la moitié moulée supérieure.

5. Dispositif selon au moins l'une des revendications 1 à 4, caractérisé en ce que le réservoir est formé d'un tuyau flexible (5).
